# EUROPÄISCHE PATENTANMELDUNG

(11) **EP 2 551 504 A1**
(43) Veröffentlichungstag der Anmeldung: **30.01.2013**
(21) Anmeldenummer: 11175158.2
(22) Anmeldetag: 25.07.2011
(51) Int. Cl.: F02F 5/00, F02F 3/00, F16J 9/20, F16J 9/08

(54) **Kolben und Ölverteilring für eine Hubkolbenbrennkraftmaschine**

(71) Anmelder: Wärtsilä Schweiz AG, 8401 Winterthur (CH)
(72) Erfinder: Stark, Matthias, 8400 Winterthur (CH)
(74) Vertreter: Sulzer Management AG

(57) **Zusammenfassung**

Die Erfindung betrifft einen Kolben (1) für eine Hubkolbenbrennkraftmaschine (2) mit mindestens einem Zylinder (3), insbesondere Zweitakt-Grossdieselmotor, in welchem Zylinder (3) der Kolben (1) im Einbauzustand einen Brennraum (VB) begrenzt und entlang einer Kolbenachse (A) des Kolbens (1) im Zylinder (3) zwischen einem oberen Totpunkt und einem unteren Totpunkt in axialer Richtung hin- und herbewegbar angeordnet ist. Dabei ist an einer Mantelfläche des Kolbens (1) zwischen einer dem Brennraum (VB) zugewandten Kolbenkrone (101) und einem dem Brennraum (VB) abgewandten Kolbenhemd (102) eine mit einer Zylinderwand (31) des Zylinders (3) reibend zusammenwirkende Kolbenringpackung (4) ausgebildet, die eine Teilringpackung (400) mit einem ersten Kolbenring (41) in einer ersten Kolbenringnute (411) umfasst, welcher erste Kolbenring (41) zwischen der Kolbenkrone (101) und einem in einer Ölringnute (4301) angeordneten Ölverteilring (43) vorgesehen ist. Erfindungsgemäss ist zur kontrollierten Druckbeaufschlagung des Ölverteilrings (43) mit einem vorgebbaren Anteil eines Brennraumdrucks (P) des Brennraums (VB), an der Teilringpackung (400) ein Druckentlastungsmittel (4000, 4111, 4112, 4113, 4114) vorgesehen. Des Weiteren betrifft die Erfindung einen Ölverteilring (43) für einen Kolben (1).

## Beschreibung

Die Erfindung betrifft einen Kolben, einen Kolbenring sowie einen Ölverteilring für einen Kolben einer Hubkolbenbrennkraftmaschine, insbesondere Zweitakt-Grossdieselmotor gemäss dem Oberbegriff der unabhängigen Ansprüche 1 und 15.

Die aus dem Stand der Technik bekannten Kolben, zum Beispiel aber nicht nur für Grossdieselmotoren sind in der Regel mit einer Packung aus mehreren, in jeweils einer Kolbenringnute übereinander angeordneten Kolbenringen ausgestattet. Typischerweise umfassen die bekannten Kolbenringpackungen mindestens zwei Kolbenringe, meist jedoch drei, vier oder sogar fünf Kolbenringe, je nach Grösse und / oder Leistung des Motors bzw. je nach Anforderungen bzw. den speziellen Betriebsbedingungen, unter denen die Maschine betrieben wird. Dabei geht der Trend mehr und mehr zu Kolbenringpackungen mit möglichst wenigen Kolbenringen. So werden inzwischen bevorzugt Kolbenringpackungen mit nur zwei Kolbenringen vorteilhaft eingesetzt. In ganz speziellen Fällen sind sogar Kolben mit nur einem einzigen Kolbenring prinzipiell möglich.

Die Kolbenringe, die verschiedene Funktionen erfüllen, wie zum Beispiel die Führung des Kolbens im Zylinder, die Verteilung und / oder das Abstreifen eines Schmiermittels auf der Lauffläche des Zylinders, die Abdichtung des Brennraums gegen die Kolbenunterseite usw., sind im Betriebszustand erheblichen Belastungen ausgesetzt. So stehen die Kolbenringe unmittelbar in reibendem Kontakt mit der Zylinderlauffläche, der Verbrennungsdruck muss von den Kolbenringen aufgenommen werden und die Kolbenringe sind somit erheblichen thermischen, mechanischen und chemischen Belastungen ausgesetzt.

Dabei übernimmt das Kolbenringpaket insbesondere nicht die Zentrierung des Kolbens im Zylinder, wie häufig fälschlicherweise angenommen wird. Konstruktionsbedingt ist dies nämlich gar nicht möglich. Die Kolbenringe selbst sind zwar im Zylinder immer automatisch in Bezug auf die radiale Richtung zentriert geführt, da ihr Aussendurchmesser in nicht eingebauter Lage immer etwas grösser als der Innendurchmesser des Zylinders gewählt wird, wobei der Durchmesser der Kolbenringe derart elastisch variabel ist, dass der Kolbering in Umfangsrichtung immer unter einem vorgebbaren Druck gegen die Zylinderwand gedrückt wird. Der Innendurchmesser der Kolbenringe ist dagegen grösser als der Aussendurchmesser der Kolbenringnuten am Kolben, in denen die Kolbenringe am Kolben angeordnet sind. Das Kolbenringpaket bzw. die einzelnen Kolberinge sind somit "frei schwimmend" in Bezug auf den Kolben bzw. die Kolbenringnuten angeordnet. Das ist auch zwingend notwendig, da die Kolbenringe möglichst nicht mit der Kolbenringnute in dauernden reibenden Kontakt stehen dürfen, da sonst der Kolbenring an der Zylinderwand nicht mehr optimal geführt wäre, es zu Verklemmungen an der Zylinderwand und / oder in der Kolbenringnute führen kann und somit zu ernsthaften Beschädigungen, bis hin zum gefürchteten Scuffing kommen kann.

Zum Beispiel ist bei längs gespülten Zweitakt-Grossdieselmotoren die Verwendung einer Kolbenringpackung bestehend aus zwei bis fünf Kolbenringen zur Abdichtung des Brennraums gegen die Kolbenunterseite, die gegen den Receiverraum gerichtet ist, aus dem zu Beginn der Spülphase Frischluft durch die Spülschlitze in den Brennraum des Zylinders strömt, gängige Praxis. Abhängig vom Ringspalt zwischen Kolben und Zylinderwand sind die unteren Kolbenringe mehr oder weniger stark belastet. Dabei können verschiedenartige Instabilitäten zwischen den unteren Kolbenringen auftreten, die zum Beispiel zu Druckfluktuationen führen können, die ihrerseits wiederum Instabilitäten im Kolbenlauf hervorrufen, unter anderem weil zu viele Kolbenringe vorhanden sind, die ähnliche oder gleiche Funktionen haben.

Grossdieselmotoren werden dabei häufig als Antriebsaggregate für Schiffe oder auch im stationären Betrieb, z. B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit Brenn- und Betriebsstoffen zentrale Kriterien für den Betrieb der Maschinen. Unter anderem ist das Kolbenlaufverhalten solcher grossbohrigen langsam laufenden Dieselmotoren ein bestimmender Faktor für die Länge der Wartungsintervalle, die Verfügbarkeit und über den Schmiermittelverbrauch auch unmittelbar für die Betriebskosten und damit für die Wirtschaftlichkeit. Damit kommt nicht nur der komplexen Problematik der Zylinderschmierung der Motoren eine immer grössere Bedeutung zu, wobei insbesondere bei Grossdieselmotoren die Zylinderschmierung durch Schmiereinrichtungen im sich hin und her bewegenden Kolben erfolgt oder durch in der Zylinderwand vorgesehene Schmieröldüsen realisiert ist.

Ein Punkt, der immer wieder Probleme beim Betrieb von Verbrennungsmotoren bereitet, sind Verbrennungsrückstände, die sich an den unterschiedlichsten Stellen im Motor ablagern können. Vor allem bei Zweitakt-Grossdieselmotoren, die häufig mit Schweröl betrieben werden, stellen Verbrennungsrückstände ein erhebliches Problem dar, da der verwendete Treibstoff, nämlich das Schweröl mit vielen Stoffen beladen ist, die zu festen, flüssigen und gasförmigen Verbrennungsrückständen aller Art führen können.

Ein weiterer wesentlicher Punkt ist einerseits das dynamische Verhalten der Kolbenringe des Kolbenringpakets im Betriebszustand. Andererseits ist für eine ausreichende Abdichtung des Brennraums gegen die Kolbenunterseite Sorge zu tragen.

Hinsichtlich des dynamischen Verhaltens der Kolbenringe, speziell der weniger belasteten "unteren" Kolbenringe, die keine direkte Verbindung zum Brennraum haben, sondern durch einen Topring des Kolbenringpakets vom Brennraum getrennt sind, hat sich gezeigt, dass diese "unteren" Kolbenringe des Kolbenringpakets aufgrund der verhältnismässig geringen gasdynamischen Belastungen zu unkontrollierten Eigenbewegungen neigen, welche nicht im Einklang mit der geforderten hydrodynamischen optimalen Bewegungsform eines Kolbenrings ist.

Ein weiterer Faktor, der sich insbesondere auch auf die Bewegung des "oberen" Toprings, also auf denjenigen Kolbenring des Kolbenringpakets auswirkt, der direkt an den Brennraum angrenzt, ist der wohlbekannte "Blowby" Effekt. Unter dem Blowby Effekt versteht der Fachmann die Tatsache, dass die Kolbenringe nicht absolut Druckdicht abdichten, sondern eine bestimmte Menge an Gas aus dem Verbrennungsraum, typischerweise 6-8% des Massenanteils der gasförmigen Inhalts des Brennraums, am Kolbenringpaket in mehr oder weniger unkontrollierter Art und Weise in Richtung zur Unterseite des Kolbens vorbeiströmen, wodurch die darin enthaltene thermische Energie im wesentlichen verloren geht.

Es muss also insbesondere gewährleistet werden, dass die im Brennraum in der Nähe des oberen Totpunktes erzeugte Druckenergie möglichst vollständig nutzbar ist und nicht zum Teil ungenutzt am Kolben vorbei in Form eines Gasstroms in den unteren Teil des Zylinders und in den Receiverraum abströmt. Ausserdem besteht bei ungenügender Abdichtung immer die Gefahr, dass durch den am Kolben nach unten vorbeiströmenden Gasstrom einzelne Partikel aus Ablagerungen von Verbrennungsrückständen unkontrolliert herausgerissen werden, so dass diese sich z.B. im unteren Teil des Zylinders an der Zylinderlauffläche ablagern können, damit nicht zuletzt das Zylinderschmieröl kontaminieren und im schlimmsten Fall zu Schäden, wie dem gefürchteten Scuffing führen können.

Dabei wird im Kolbenringpaket in der Praxis sehr häufig auch ein Ölverteilring vorgesehen, der für eine bessere Verteilung des Schmieröls auf der Zylinderlauffläche sorgen soll, insbesondere in Umfangsrichtung der Zylinderlauffläche. Die bekannten Ölverteilringe, die oft auch als Ölabstreifer oder Ölsammler bezeichnet werden, sammeln dabei neben dem Schmieröl auch für das Tribosystem schädliche feste, flüssige und z.B. im Schmieröl enthaltene gasförmige schädliche Rückstände, was oft zum sogenannten "Fressen" oder "Scuffing" führt, also zu ernsthaften Schäden an der Zylinderlauffläche, den Kolbenringen und dem Kolben selbst führen kann.

Darüber hinaus ist ein wesentlicher Grund dafür, dass eine Vermeidung der vorgenannten unerwünschten und zum Teil extrem schädlichen Auswirkungen zunehmend an Bedeutung gewinnt, nicht zuletzt darin zu sehen, dass immer höhere Leistungen, bei gleichzeitiger Reduktion von Treib- und Schmierstoffverbrauch verlangt wird und darüber hinaus vor allem auch die Abgasnormen ständig verschärft werden.

Die vorgenannten negativen Effekte führen jedoch zu mehr Treibstoff- und Schmiermittelverbrauch und natürlich auch zu verschmutzungsbedingten Abnutzungserscheinungen an Kolben, Kolbenringen und Zylinderwänden und zu einer Verschlechterung der Abgaswerte, sowie zu frühzeitigem Verschleiss aufgrund von hydrodynamisch schlecht optimiertem Bewegungsverhalten der Kolbenringe des Kolbenringpakets.

Die Aufgabe der Erfindung ist es daher, einen verbesserten Kolben, sowie einen entsprechenden Kolbenring und einen Ölverteilring vorzuschlagen, mit dem die zuvor beschriebenen Nachteile des Stands der Technik vermieden werden. Insbesondere ist es eine Aufgabe der Erfindung, einen verbesserten Kolben mit verbesserten Kolbenringen vorzuschlagen, welcher eine bessere Abdichtung des Brennraums gegen die Kolbenunterseite gewährleistet, wobei gleichzeitig ein hydrodynamisch optimiertes Laufverhalten der Kolbenringe garantiert ist, d.h. insbesondere auch die unkontrollierten Eigenbewegungen der "unteren", gasdynamisch eher schwach belasteten Kolbenringe weitgehend zu unterdrücken. Im speziellen soll darüber hinaus eine verbesserte Verteilung des Schmieröls gewährleistet werden, wobei gleichzeitig dafür Sorge getragen werden soll, dass sich die Konzentration der im Ölverteilring gesammelten Schmutzablagerungen nicht auf ein vorbestimmtes Mass erhöht. Dadurch soll letztlich ein wirtschaftlicherer Betrieb der Hubkolbenbrennkraftmaschine, längere Wartungsintervalle und damit eine höhere Lebensdauer der betroffenen Komponenten und des Motors insgesamt gewährleistet werden.

Die diese Aufgaben lösenden Gegenstände der Erfindung sind durch die Merkmale der unabhängigen Ansprüche 1 und 15 gelöst.

Die abhängigen Ansprüche beziehen sich auf besonders vorteilhafte Ausführungsformen der Erfindung.

Die Erfindung betrifft somit einen Kolben für eine Hubkolbenbrennkraftmaschine mit mindestens einem Zylinder, insbesondere Zweitakt-Grossdieselmotor, in welchem Zylinder der Kolben im Einbauzustand einen Brennraum begrenzt und entlang einer Kolbenachse des Kolbens im Zylinder zwischen einem oberen Totpunkt und einem unteren Totpunkt in axialer Richtung hin- und herbewegbar angeordnet ist. Dabei ist an einer Mantelfläche des Kolbens zwischen einer dem Brennraum zugewandten Kolbenkrone und einem dem Brennraum abgewandten Kolbenhemd eine mit einer Zylinderwand des Zylinders reibend zusammenwirkende Kolbenringpackung ausgebildet, die eine Teilringpackung mit einem ersten Kolbenring in einer ersten Kolbenringnute umfasst, welcher erste Kolbenring zwischen der Kolbenkrone und einem in einer Ölringnute angeordneten Ölverteilring. Erfindungsgemäss ist zur kontrollierten Druckbeaufschlagung des Ölverteilrings mit einem vorgebbaren Anteil eines Brennraumdrucks des Brennraums, an der Teilringpackung ein Druckentlastungsmittel vorgesehen.

Durch die Verwendung des erfindungsgemässen Kolbens ist es erstmals gelungen, die aus dem Stand der Technik bekannten Probleme mit den unkontrollierten hydrodynamischen Bewegungsformen der Kolbenringe, dem Verlust an Motorleistung durch Blowby und den damit verbundenen unkontrollierten Transport von schädlichen Ablagerungen, sowie eine optimale Verteilung des Schmieröls im Bereich der Kolbenringpackung gleichzeitig zu erreichen.

Um dies zu erreichen, wird durch die Erfindung an der Teilringpackung ein Druckentlastungsmittel vorgesehen. Die Teilringpackung umfasst in einem besonders bevorzugten Ausführungsbeispiel einen ersten Kolbenring, der in der Praxis meistens der Topring, also der Kolbenring ist, der zum Brennraum am nächsten angeordnet ist, und an einer einem Ölverteilring zugewandten Unterseite mit einer Druckentlastungsnute bzw. einer Druckentlastungsbohrung ausgestattet ist. Durch die Druckentlastungsnute an der Unterseite des ersten Kolbenrings, kann der darunterliegende Ölverteilring in kontrollierter Weise mit einem vorgebbaren Anteil des Brennraumdrucks beaufschlagt werden, da durch eine geeignete Wahl der Geometrie und Anordnung der Druckentlastungsnuten ein kontrollierter Gasstrom, also ein kontrollierter Blowby auf den Ölverteilring generierbar ist, so dass die gasdynamische Belastung nicht nur auf den Ölverteilring, sondern auch auf einen oder eventuell unterhalb des Ölverteilrings zusätzlich noch vorhandenen zweiten Kolbenring geeignet vergrössert wird.

Eine analoge Wirkung entfalten die Druckentlastungsmittel in Form einer Druckentlastungsbohrung im Kolbenring oder in Form einer Druckentlastungsfuge an der ersten Kolbenringnute oder in Form eines Druckentlastungskanals an einer dem zweiten Kolbering zugewandten Seite der ersten Kolbenringnute. Es versteht sich von selbst, dass die zuvor erwähnten und weiter unten noch genauer beschriebnen verschiedenen Druckentlastungsmittel auch teilweise oder alle gleichzeitig vorteilhaft vorgesehen werden können.

Wesentlich für ein bevorzugtes Ausführungsbeispiel der Erfindung ist dabei, dass zwischen dem ersten Kolbenring und dem zweiten Kolbenring, beispielweise (aber nicht notwendig) im Speziellen zwischen dem ersten Kolbenring und dem Ölverteilring in der Mantelfläche ein in Geometrie und Anordnung optimierter und auf das Kolbenringpaket bzw. auf den Kolben abgestimmter Zwischenraum in Form einer Ausnehmung vorgesehen ist. In Kombination mit den zuvor erwähnten Druckentlastungsmitteln, die bevorzugt in einer mehr oder weniger stark tangentialen Richtung, also in einer von der radialen Richtung mehr oder weniger stark abweichenden Richtung ausgebildet sind, wird einerseits ein exakt kontrollierter Blowby zugelassen und andererseits durch die mehr oder weniger stark tangential angeordneten Druckentlastungsmittel eine bevorzugt strudelartige Verwirbelung des vorbeiströmenden Gases erzeugt, der es in Kombination mit der auf den Gastrom volumenoptimierten Ausnehmung zwischen dem ersten und dem zweiten Kolbenring einerseits erlaubt, den zweiten Kolbenring derart mit einem Teil des Brennraumdrucks zu beaufschlagen, dass die aus dem Stand der Technik bekannten schädlichen unkontrollierten Eigenbewegungen des zweiten Kolbenrings im wesentlichen unterbunden werden, so dass der zweite Kolbenring bei einem erfindungsgemässen Kolben hydrodynamisch optimale Bewegungsformen annimmt.

Anderseits wirkt sich die strudelartige Verwirbelung des vorbeiströmenden Gases in Kombination mit der volumenoptimierten Ausnehmung gleichzeitig auch positiv auf die Umfangsverteilung des Schmiermittels aus, d.h. die Schmiermittelverteilung wird insbesondere in Bezug auf die Umfangsrichtung des Zylinders deutlich verbessert.

Nicht zuletzt ist darüber hinaus auch für eine ausreichende Abdichtung des Brennraums gegen die Kolbenunterseite Sorge getragen. Da der zweite Kolbenring nur mit einem Teil des Brennraumdrucks und zudem in kontrollierter Art und Weise belastet wird, kann dieser praktisch gasdicht ausgeführt werden, so dass der eingangs erwähnte Druckverlust durch unkontrollierten Blowby mehr oder weniger vollständig unterbunden wird, und somit die im Brennraum erzeugte Energie besser und effizienter ausnutzbar ist. Zudem kann der zweite Kolbenring bevorzugt dünner und damit materialsparender und damit auch kostengünstiger ausgeführt werden, da auf ihm nur ein verhältnismässig kleiner Teildruck lastet.

Was den positiven Zusatzeffekt hat, dass der Transport schädlicher Schmutzpartikel aus dem Brennraum auf die Zylinderlauffläche unterhalb des Kolbens im wesentlichen vollständig unterbunden ist, so dass die aus dem Stand der Technik bekannten schädlichen Ablagerungen und damit eine entsprechende Kontamination des Zylinderschmieröls massiv reduziert werden können, so dass die Gefahr von Schäden durch die als "Fressen" oder "scuffing" gefürchteten Effekte wesentlich verringert wird.

Somit kann durch die Erfindung nicht nur der Treibstoff- und Schmiermittelverbrauch merklich gesenkt werden, sondern auch verschmutzungsbedingte Abnutzungserscheinungen an Kolben, Kolbenringen und Zylinderwänden, die letztlich zu einer Verschlechterung der Abgaswerte, sowie zu frühzeitigem Verschleiss aufgrund von hydrodynamisch schlecht optimiertem Bewegungsverhalten der Kolbenringe des Kolbenringpakets führen, werden deutlich reduziert, wodurch Wartungsintervalle verlängert werden können und die Lebensdauer der beteiligten Komponenten erhöht wird, so dass ein Motor mit einem erfindungsgemässen Kolben im Vergleich zum Stand der Technik wirtschaftlicher betrieben werden kann und aufgrund verbesserter Abgaswerte auch umweltfreundlicher ist.

Bevor weiter unten die Erfindung anhand spezieller exemplarischer Ausführungsbeispiele näher im Detail erläutert werden wird, sollen nachfolgend die Grundprinzipien der Funktion eines erfindungsgemässen Kolbens noch etwas näher beleuchtet werden.

Das Ziel der hydrodynamisch optimierten Kolbenringpackung der vorliegenden Erfindung ist es unter anderem auch, einen hydrodynamischen Druck zu generieren, der die Trennung von Kolbenring und Zylinderlauffläche unterstützt, wodurch die Schmierung zwischen Zylinderlauffläche und Kolbenring verbessert wird, die Kontaktzeiten zwischen Zylinderlauffläche und Kolbenring herabgesetzt werden und dadurch letztlich der Verschleiss reduziert wird. Dazu kann die Kontaktfläche des Kolbenrings, die in reibendem Kontakt mit der Zylinderlauffläche steht, z.B. geeignet strukturiert bzw. texturiert werden, z.B. durch Bearbeitung mit einem Laser oder anderen geeigneten an sich bekannten Methoden, was bei geeigneter Wahl der Strukturierung das Zusammenwirken von Kolbering und Zylinderlauffläche zusätzlich positiv beeinflussen und die Ausbildung eines hydrodynamischen Schmierölfilms beschleunigen kann.

Wenn sich der Kolben bei seiner axialen Bewegung im Zylinder am oberen Totpunkt befindet, ist seine Geschwindigkeit bei null, bzw. genau am oberen Totpunkt exakt null. Der Kolbenring ist in intensivem Kontakt mit der Zylinderlauffläche und es herrschen Bedingungen der Mischreibung. Sobald der Verbrennungsvorgang im Brennraum einsetzt, beginnt sich der Kolben in Richtung zum unteren Totpunkt zu bewegen. Durch den Kolben der vorliegenden Erfindung ist es nunmehr zusätzlich möglich, viel schneller als aus dem Stand der Technik bekannt, einen stabilen hydrodynamischen Schmierfilm aufzubauen, wodurch Wärmentwicklung und Verschleiss deutlich reduzierbar sind. Abhängig von der Verwendung, den Betriebsbedingungen, unter denen der Motor normalerweise betrieben wird, abhängig von Verbrennungsparametern wie Druck, Temperatur, verwendetem Treibstoff usw. wählt der Fachmann Geometrie, Ausbildung und gegenseitige Lage und Anordnung von Druckentlastungsnuten und volumenoptimierter Ausnehmung zwischen dem ersten und dem zweiten Kolbenring.

In einem bevorzugten Ausführungsbeispiel ist das Teilringpaket, im Speziellen der Topring, der dem Brennraum am nächsten angeordnet ist, derart ausgestaltet, dass in einem Bereich an einer dem Brennraum zugewandten Oberseite des ersten Kolbenring im Betriebszustand ein erster Teildruck des Brennraumdrucks ausbildbar ist und in einem Bereich an einer dem Brennraum zugewandten Oberseite des zweiten Kolbenrings im Betriebszustand ein zweiter Teildruck des Brennraumdrucks ausbildbar ist. Dabei ist der erste Teildruck besonders bevorzugt grösser ist als der zweite Teildruck und im speziellen kann der Brennraumdruck im wesentlichen die Summe aus einem über dem Ölsammelring anliegenden Druckabfall und dem ersten Teildruck und dem zweiten Teildruck sein, wobei in einem für die Praxis besonders wichtigen Ausführungsbeispiel der erste Teildruck bevorzugt zwischen 55% und 95%, Im speziellen ca. 65% des Brennraumdrucks beträgt.

Um einerseits eine optimale gasdynamische Belastung auf dem zweiten Kolbenring zu erreichen und andererseits eine verbesserte Verteilung des Schmieröls in Umfangsrichtung sicher zu stellen, ist das Druckentlastungsmittel besonders bevorzugt eine Druckentlastungsnute und erstreckt sich die Druckentlastungsnute vorteilhaft in einer von einer radialen Richtung abweichenden Richtung an der Unterseite des ersten Kolbenrings, bevorzugt senkrecht zur Kolbenachse. Im Speziellen kann sich die Druckentlastungsnute über eine gesamte Breite des Kolbenrings erstrecken.

Dabei kann das Druckentlastungsmittel auch zum Beispiel in Form einer Druckentlastungsfuge an der ersten Kolbenringnute vorgesehen sein. Oder in einem anderen Ausführungsbeispiel kann das Druckentlastungsmittel auch in Form einer Druckentlastungsbohrung im ersten Kolbenring oder in Form eines Druckentlastungskanals an der ersten Kolbenringnute vorgesehen sein. Dabei erstrecken sich auch die Druckentlastungsbohrungen im ersten Kolbenring oder der Druckentlastungskanal an der ersten Kolbenringnute oder aber auch die Druckentlastungsfuge besonders vorteilhaft in der von der radialen Richtung abweichenden Richtung, bevorzugt senkrecht, d.h. kaum oder wenig geneigt in Bezug auf die Kolbenachse.

Es versteht sich dabei von selbst, dass ein erfindungsgemässer Kolben auf mehr als nur zwei Kolbenringe umfassen kann, wie insbesondere weiter unten noch klar wird. Dabei umfasst ein Kolben der vorliegenden Erfindung in einem speziellen Beispiel nur zwei Kolbenringe, nämlich den ersten Kolbenring und den darunter liegenden Ölverteilring, der weiter unten noch detaillierter diskutiert werden wird.

Zur Optimierung des kontrollierten Blowby-Effekts gemäss der vorliegenden Erfindung, kann der erste Kolbenring oder auch andere im Kolbenringpaket vorhandene Kolbenringe, in Bezug auf die Kolbenachse eine mit der Zylinderwand zusammenwirkende asymmetrische Aussenkontur aufweisen, wobei die Breite des ersten Kolbenrings in Richtung zur Ausnehmung bevorzugt zunehmend grösser wird.

Wie weiter oben bereits erwähnt, ist der zweite Kolbenring vorteilhaft derart ausgestaltet, dass er im Einbau- und Betriebszustand weitgehend druckdicht mit der Zylinderwand des Zylinders zusammenwirkt, so dass das Kolbenringpaket insgesamt den Brennraum besser gegen die Kolbenunterseite abdichtet, als das bei einem aus dem Stand der Technik bekannten Kolben der Fall ist.

Die Ausnehmung in der Mantelfläche des Kolbens ist einem speziellen Ausführungsbeispiel ein zwischen dem ersten Kolbenring und dem zweiten Kolbenring in einer Umfangsrichtung des Kolbens verlaufender Ringraum, im Speziellen eine Ringnute, insbesondere eine um die Kolbenachse verlaufende schraubenförmige Nute. Dabei kann die Ausnehmung im Speziellen zwischen dem ersten Kolbenring und dem Ölverteilring und / oder auch zwischen dem Ölverteilring und dem zweiten Kolbenring ausgebildet sein.

Dabei kann in einem anderen speziellen Ausführungsbeispiel die Ausnehmung auch beispielsweise als eine flächenhafte Vertiefung in der Mantelfläche des Kolbens ausgebildet sein, wobei bevorzugt eine Mehrzahl von separaten flächenhaften Vertiefungen vorhanden ist. Es versteht sich, dass die Ausnehmung der Erfindung auch in jeder anderen geeigneten Form ausgestaltet und zwischen dem ersten und dem zweiten Kolbering angeordnet sein kann.

Insbesondere um die Verteilung des Schmieröls auf der Zylinderlauffläche noch weiter zu verbessern und die Belastung des Schmieröls mit Schadstoffen möglichst zu reduzieren bzw. möglichst gering zu halten, kann in einem bevorzugten Ausführungsbeispiel zwischen dem ersten Kolbenring und dem zweiten Kolbenring auch ein Ölverteilring angeordnet sein, wobei, wie bereits erwähnt, der zweite Kolbenring bei einem erfindungsgemässen Kolben auch fehlen kann.

Besonders bevorzugt ist am Ölverteilring der vorliegenden Erfindung ein Verbindungskanal, eventuell mit einem Vorratsreservoir für Schmieröl vorgesehen, der an einer dem Brennraum zugewandten Oberseite eine mit einem vorgebbaren Anteil des Brennraumdrucks beaufschlagbare Einlassöffnung und eine an einer äusseren Umfangsfläche, die im Betriebszustand mit der Zylinderwand in reibendem Kontakt steht, vorgesehene Auslassöffnung verbindet.

Dabei ist es auch möglich, dass der zweite Kolbenring selbst als Ölverteilring ausgebildet ist.

Der optimierte Ölverteilring der vorliegenden Erfindung, bzw. die Einlassöffnung des Ölverteilrings wird dabei über den kontrollierten Blowby, der erfindungsgemäss durch den ersten Kolbenring erzeugt wird, mit einem vorgebbaren Gasdruck kontrolliert beaufschlagt. Das im Verbindungskanal bzw. im Vorratsreservoir des Verbindungskanals gesammelte Schmieröl wird dadurch durch die Auslassöffnung, die bevorzugt düsenartig ausgestaltet ist, nach aussen, bevorzugt radial nach aussen aus dem Ölverteilring auf die Zylinderlauffläche zurückgeführt. Überschreitet der Ölverteilring die Spülschlitze, werden der Verbindungskanal bzw. das Vorratsreservoir durch die Spülschlitze heraus frei geblasen, was eine Ansammlung von schädlichen Rückständen verhindert. Bei entsprechender konstruktiver Ausgestaltung des Ölverteilrings ist nicht mit einem höheren Schmiermittelverbrauch als bei bekannten Kolbenringpaketen zu rechnen, da auch bei bekannten Kolben im Bereich der Spülschlitze immer Schmieröl verloren geht. Ganz im Gegenteil. Durch geeignete konstruktive Massnahmen kann der Schmierölverlust an den Spülschlitzen durch Verwendung eines Ölverteilring gemäss der vorliegenden Erfindung sogar noch reduziert werden.

Die Erfindung betrifft weiter einen Kolbenring für einen Kolben einer Hubkolbenbrennkraftmaschine zur Verwendung in einem erfindungsgemässen Kolben, wie er in dieser Anmeldung ausführlich beschrieben ist. Der erfindungsgemässe Kolbenring kann zur Bildung einer Kolbenringpackung an einem Kolben der Erfindung angeordnet werden, wobei an einer im Einbauzustand einem Brennraum abgewandten Unterseite des Kolbenrings eine Druckentlastungsnute vorgesehen ist, die sich über einen vorgebbaren Bereich an der Unterseite des Kolbenrings erstreckt.

Schliesslich betrifft die Erfindung auch einen Ölverteilring für einen erfindungsgemässen Kolben einer Hubkolbenbrennkraftmaschine, wobei am Ölverteilring ein Verbindungskanal, bevorzugt umfassend ein Vorratsreservoir für Schmieröl, vorgesehen ist, der an einer im Einbauzustand einem Brennraum zugewandten Oberseite eine mit einem vorgebbaren Anteil eines Brennraumdrucks beaufschlagbare Einlassöffnung und eine an einer äusseren Umfangsfläche, die im Einbau- und Betriebszustand mit einer Zylinderwand in reibendem Kontakt steht, vorgesehene Auslassöffnung verbindet.

Es versteht sich von selbst, dass die in dieser Anmeldung beschriebenen Beispiele von Ausführungsformen erfindungsgemässer Kolben bzw. Kolbenringen lediglich exemplarisch zu verstehen sind, und insbesondere auch alle geeigneten Kombinationen der dargestellten Ausführungsbeispiele von der Erfindung umfasst sind.

Im Folgenden wird die Erfindung an Hand der Zeichnung näher erläutert. Es zeigen in schematischer Darstellung:
- Fig. 1: ein erstes Ausführungsbeispiel eines erfindungsgemässen Kolbens;
- Fig. 2a: ein erster Kolbenring mit über die gesamte Breite verlaufender Druckentlastungsnute:
- Fig. 2b: ein zweites Ausführungsbeispiel gemäss Fig. 2a mit einer gekrümmten Druckentlastungsnute;
- Fig. 2c: ein erster Kolbenring mit einer nur partiell ausgebildeten Druckentlastungsnute;
- Fig. 2d: ein anderer erster Kolbenring mit einer Druckentlastungsbohrung;
- Fig. 2e: eine erste Kolbenringnute mit einer Druckentlastungsfuge;
- Fig. 2f: eine andere erste Kolbenringnute mit einem Druckentlastungskanal;
- Fig. 3a: ein zweites Ausführungsbeispiel eines erfindungsgemässen Kolbens mit einer Ausnehmung in Form einer umlaufenden Ringnute;
- Fig. 3b: ein drittes Ausführungsbeispiel eines erfindungsgemässen Kolbens mit einer Ausnehmung in Form einer umlaufenden schraubenförmigen Nute;

- Fig. 3c: ein viertes Ausführungsbeispiel eines erfindungsgemässen Kolbens mit einer Ausnehmung in Form separater flächenhafter Vertiefungen;
- Fig. 4: ein bevorzugtes Ausführungsbeispiel eines erfindungsgemässen Ölverteilrings.

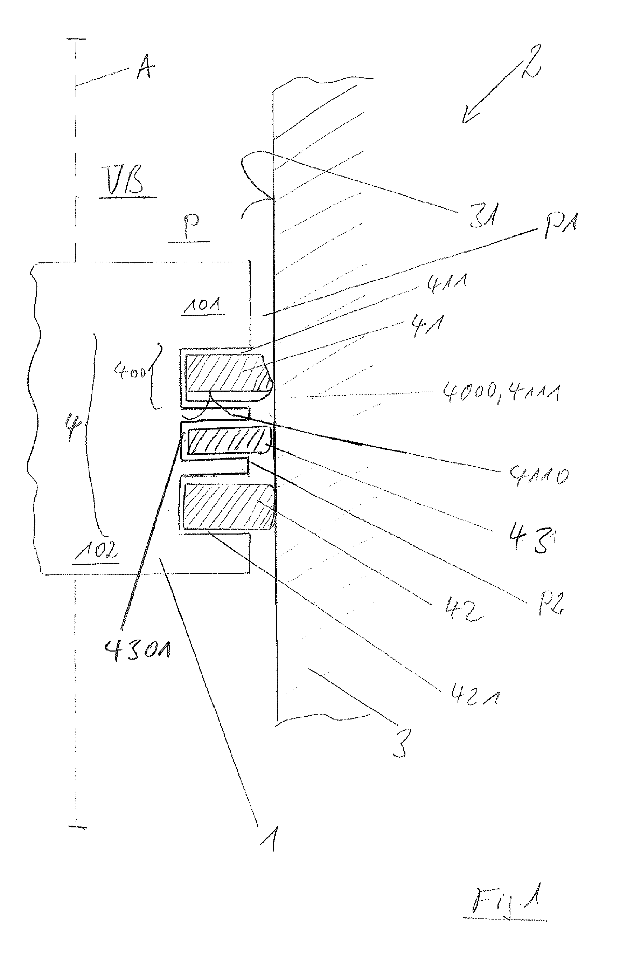

In Fig. 1 ist ein erstes Ausführungsbeispiel eines erfindungsgemässen Kolbens, der im Folgenden gesamthaft mit dem Bezugszeichen 1 bezeichnet ist, in einer Schnittzeichnung im Zusammenwirken mit der Zylinderlauffläche 31 des Zylinders 3 schematisch dargestellt.

Der erfindungsgemässe Kolben gemäss Fig. 1 ist ein Kolben für einen Zweitakt-Grossdieselmotor 2, der in der Regel eine Mehrzahl von Zylindern 3 hat, in welchem Zylinder 3 der Kolben 1 im Einbauzustand gemäss Fig. 1 einen Brennraum VB begrenzt und entlang einer Kolbenachse A des Kolbens 1 im Zylinder 3 zwischen einem oberen Totpunkt und einem unteren Totpunkt in axialer Richtung hin- und herbewegbar angeordnet ist. An einer Mantelfläche des Kolbens 1 ist zwischen einer dem Brennraum VB zugewandten Kolbenkrone 101 und einem dem Brennraum VB abgewandten Kolbenhemd 102 in an sich bekannter Weise eine mit einer Zylinderwand 31 des Zylinders 3 reibend zusammenwirkende Kolbenringpackung 4 ausgebildet, die im speziellen Ausführungsbeispiel der Fig. 1 einen ersten Kolbenring 41 in einer ersten Kolbenringnute 411 umfasst, wobei der erste Kolbenring 41 zwischen der Kolbenkrone 101 und einem in einer zweiten Kolbenringnute 421 angeordneten zweiten Kolbenring 42 vorgesehen ist. Zwischen dem ersten Kolbenring 41 und dem zweiten Kolbenring 42 ist in einer Ölringnute 4301 ein Ölverteilring 43 gemäss der Erfindung vorgesehen. Zur kontrollierten Druckbeaufschlagung des Ölverteilrings 43 und des zweiten Kolbenrings 42 mit einem vorgebbaren Anteil eines Brennraumdrucks P des Brennraums VB, ist an einer dem zweiten Kolbenring 42 zugewandten Unterseite 4110 des ersten Kolbenrings 41 eine Druckentlastungsnute 4111 vorgesehen sein, die sich über einen vorgebbaren Bereich über die gesamte Breite b des Kolbenrings 41 an der Unterseite 4110 des ersten Kolbenrings 41 erstreckt.

Der erste Kolbenring 41 ist dabei derart ausgestaltet, dass in einem Bereich an einer dem Brennraum VB zugewandten Oberseite des ersten Kolbenring im Betriebszustand ein erster Teildruck P1 des Brennraumdrucks P ausbildbar ist und in einem Bereich an einer dem Brennraum VB zugewandten Oberseite des zweiten Kolbenrings 42 im Betriebszustand ein zweiter Teildruck P2 des Brennraumdrucks P ausbildbar ist. Im Beispiel der Fig. 1 ist der Brennraumdruck P die Summe von einem Druckabfall über dem Ölverteilring 43 und dem ersten Teildruck P1 und dem zweiten Teildruck P2, wobei der erste Teildruck P1 ca. 65% des Brennraumdrucks P beträgt. Der zweite Kolbenring 42 ist dabei derart ausgestaltet, dass er weitgehend druckdicht mit der Zylinderwand 31 des Zylinders 3 zusammenwirkt.

Wie deutlich zu erkennen ist, hat der erste Kolbenring 41 gemäss Fig. 1 in Bezug auf die Kolbenachse A eine mit der Zylinderwand 31 zusammenwirkende asymmetrische Aussenkontur, wobei die Breite b des ersten Kolbenrings 41 in Richtung zur Ausnehmung 5, 51 zunehmend grösser wird. Diese Form begünstigt deutlich den kontrolliert einstellbaren Blowby, also den kontrollierten Gasfluss vorbei am ersten Kolbenring 41.

In einem anderen Ausführungsbeispiel als dem gemäss Fig. 1 kann z.B. der zweite Kolbenring 42 auch fehlen oder es können noch zusätzliche Kolbenringe vorgesehen sein.

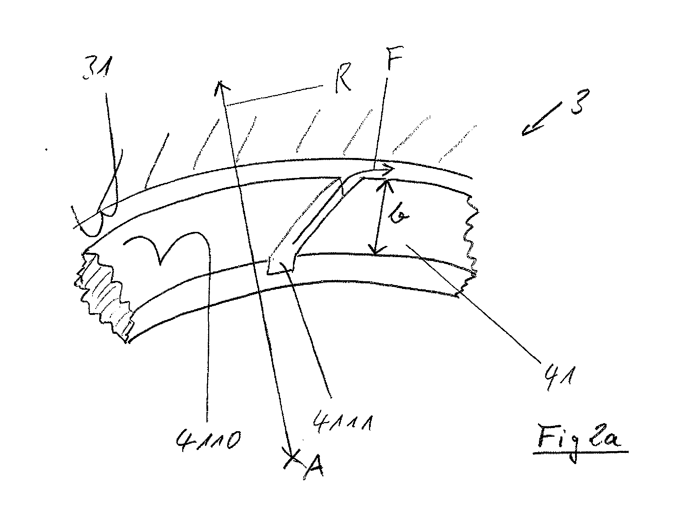

Die Fig. 2a bis Fig. 2c zeigen exemplarisch zur Verdeutlichung drei Ausführungsvarianten von Druckentlastungsnuten 4111 von erfindungsgemässen ersten Kolbenringen 41, wobei mit dem Bezugszeichen F ein Gasfluss durch die Druckentlastungsnute 4111 bezeichnet ist.

Die Druckentlastungsnute 4111 der Fig. 2a bis Fig. 2c erstrecken sich jeweils in einer von einer radialen Richtung R abweichenden Richtung an der Unterseite 4110 des Kolbenrings 41, bei den vorliegenden Beispielen senkrecht zur Kolbenachse A, das heisst nicht zur Ausnehmung 5, 51, 52, 53 hin oder von der Ausnehmung 5, 51, 52, 53 weggeneigt. Es versteht, sich dass in einem anderen hier nicht explizit gezeigten Ausführungsbeispiel eine Druckentlastungsnute 4111 in Bezug auf die Kolbenachse A auch in Richtung zur Ausnehmung 5, 51, 52, 53 hin oder weg gerichtet angeordnet sein kann.

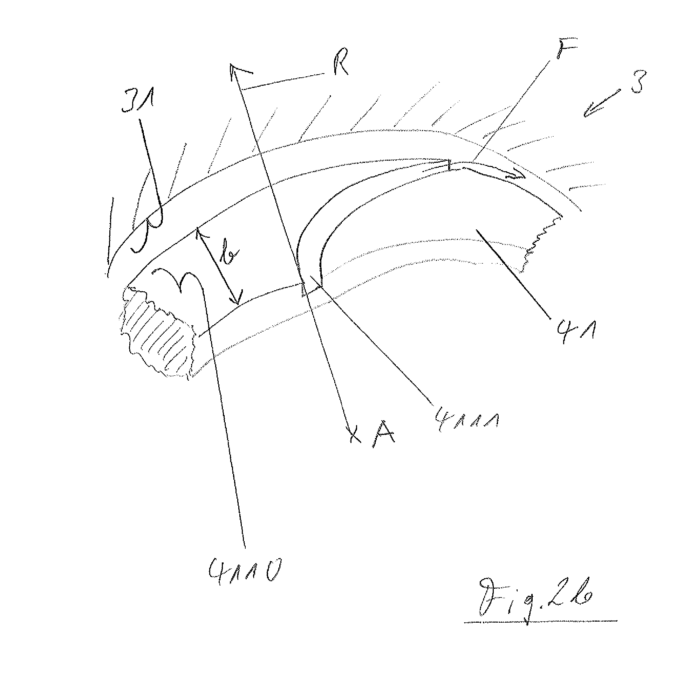

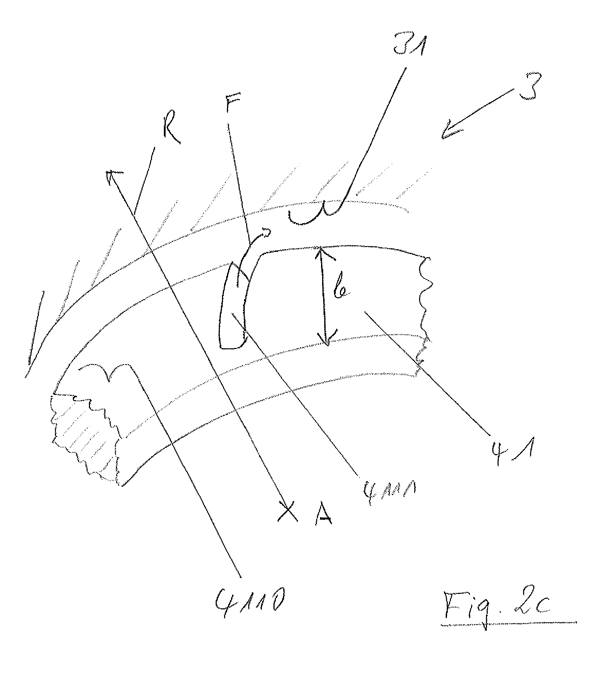

Bei den Ausführungsbeispielen gemäss Fig. 2a und Fig. 2b erstreckt sich die Druckentlastungsnute 4111 jeweils über eine gesamte Breite b des erfindungsgemässen Kolbenrings 41, während die Druckentlastungsnute 4111 im Beispiel der Fig. 2c nicht über die gesamte Breite b des Kolbenrings 41 ausgebildet ist.

Die Druckentlastungsnute 4111 des erfindungsgemässen Kolbenrings 41 der Fig. 2b hat dabei noch eine in Umfangsrichtung des Kolbenrings 41 gerichteten gekrümmten Verlauf, so dass die Druckentlastungsnute 4111 fast tangential, also fast senkrecht zur radialen Richtung R in den Zwischenraum zwischen Zylinderlauffläche 31 und Kolbenring 41 einmündete, wodurch eine noch bessere Verteilung bzw. Verwirbelung des Gasflusses F erreicht wird.

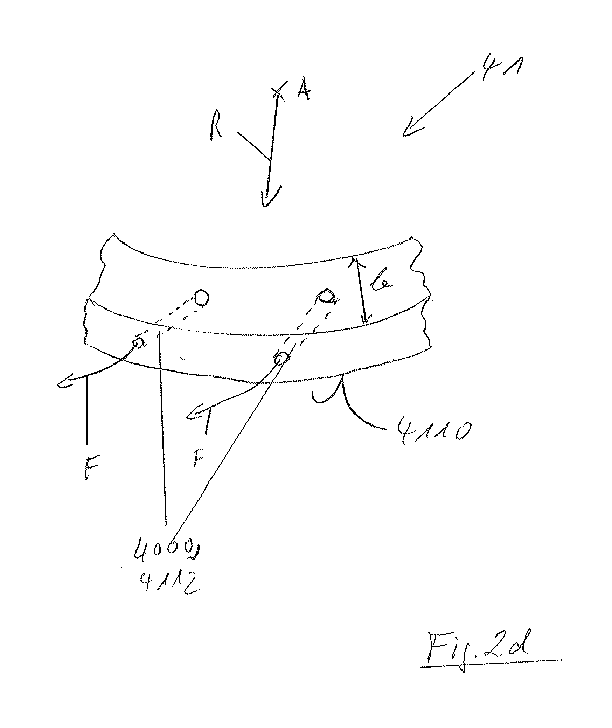

Die Fig. 2d bis Fig. 2f zeigen weitere Varianten von Druckentlastungsmitteln 4000, 4112, 4113, 4114, die ebenfalls entweder alternativ zur Druckentlastungsnute 4111 oder aber in allen möglichen Kombination miteinander und / oder mit der Druckentlastungsnute 4111 an einem erfindungsgemässen Kolben vorgesehen sein können, wobei die ebenfalls dargestellte Ausnehmung 5 selbstverständlich für die vorliegende Erfindung nur optional ist.

Fig. 2d zeigt dabei exemplarisch einen ersten Kolbering 41 der alternativ oder zusätzlich zu den Druckentlastungsnuten 4111 Druckentlastungsbohrungen 4112 aufweist, die ebenfalls in tangentialer Richtung, also weg von der radialen Richtung weg ausgerichtet sind. Bevorzugt sind die Druckentlastungsbohrungen 4112 dabei gegen die Kolbenachse A in Richtung zum nicht dargestellten zweiten Kolbering 42 hin geneigt, wodurch die Druckbeaufschlagung des nicht dargestellten Ölverteilrings 43 bzw._des zweiten Kolberings 42 weiter optimierbar ist.

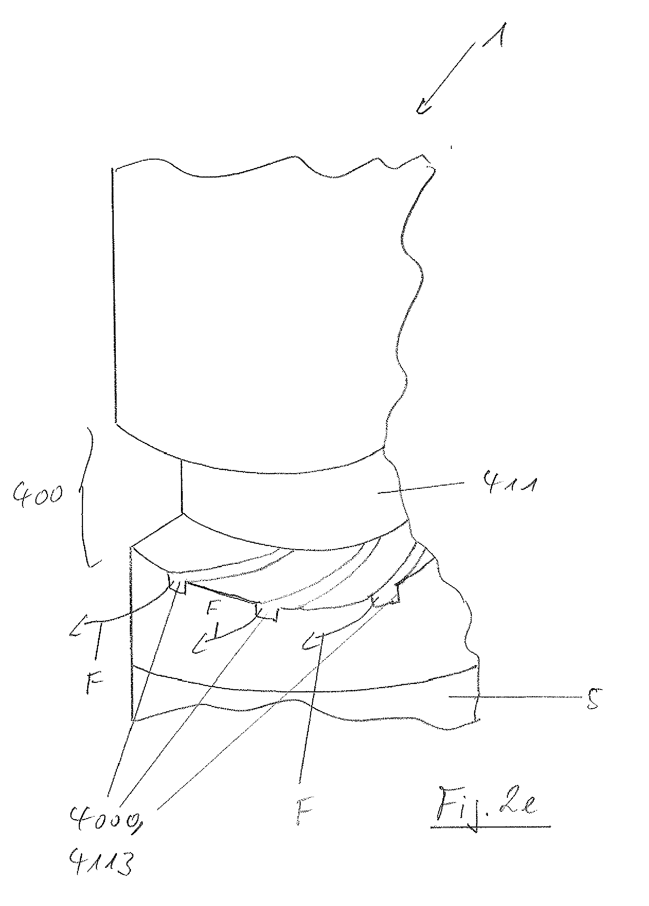

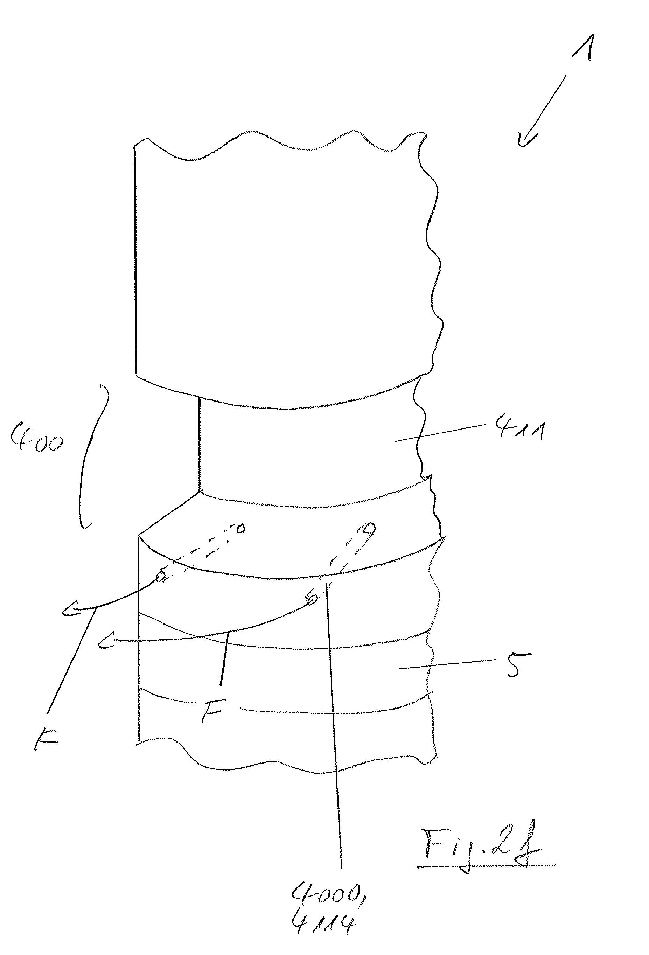

Anhand der Fig. 2e ist ein weiteres Ausführungsbeispiel eines erfindungsgemässen Kolbens 1 gezeigt, bei welchem an der ersten Kolberingnute 411 Druckentlastungsfugen 4113 vorgesehen sind, und anhand der Fig. 2f ist schliesslich noch ein weiteres Ausführungsbeispiel mit Druckentlastungskanälen 4114 schematisch dargestellt, wobei aus Gründen der Übersichtlichkeit auf die Darstellung des Ölverteilrings bzw. des ersten Kolbenrings 41 jeweils verzichtet wurde. Der Fachmann versteht ohne weiteres, dass die Wirkungsweise der Druckentlastungsfugen 4113 und der Druckentlastungskanäle 4114 mit der Funktionsweise der Druckentlastungsfugen 4111 und / oder der Druckentlastungsbohrungen 4112 vergleichbar ist.

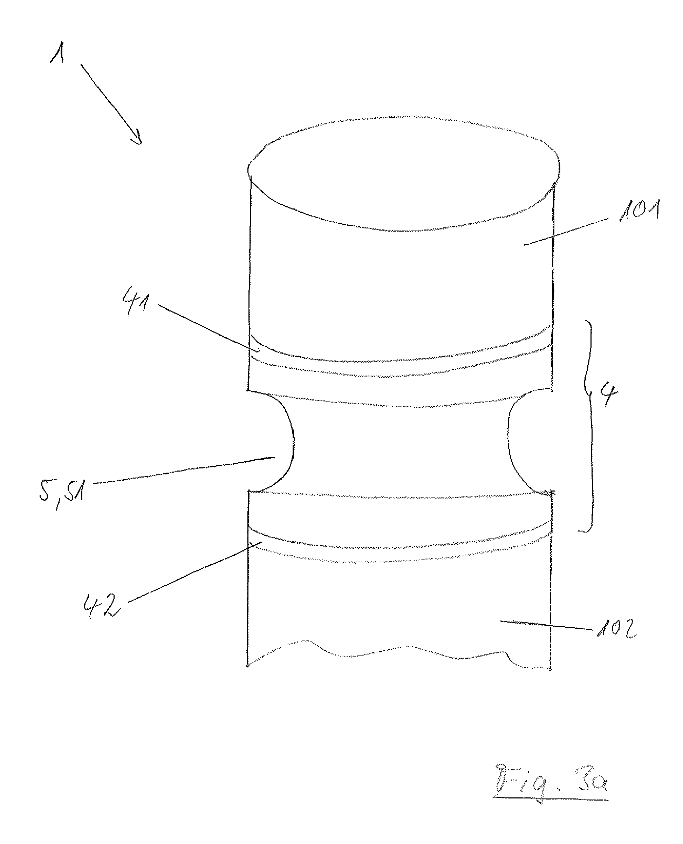

Die Fig. 3a bis 3c zeigen verschiedene Ausführungsformen von Ausnehmungen 5, 51, 52, 53, die erfindungsgemäss irgendwo zwischen dem ersten Kolbenring 41 und dem zweiten Kolbenring 42 vorgesehen sind, wobei auf die Darstellung des Ölverteilrings 43, der unterhalb des ersten Kolbenrings 41 und / oder oberhalb des zweiten Kolbenrings 42 vorgesehen ist, aus Gründen der Übersichtlichkeit verzichtet wurde.

Dabei ist anhand der Fig. 3a ein zweites Ausführungsbeispiel eines erfindungsgemässen Kolbens 1 schematisch dargestellt, bei welchem Ausnehmung 5, 51 in Form einer um den Umfang des Kolbens 1 umlaufenden Ringnute 51 ausgeführt. Es versteht sich, dass in einer anderen Ausführungsform gem. Fig. 3a auch mehrerer umlaufende Ringnuten parallel oder nicht parallel vorteilhaft vorgesehen werden können.

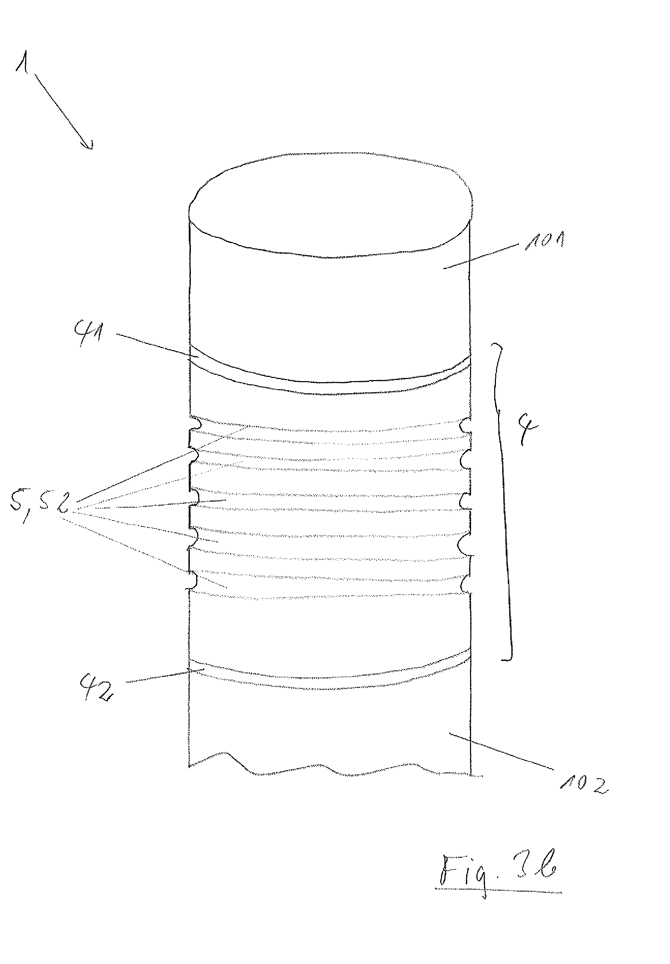

Bei dem drittes Ausführungsbeispiel eines erfindungsgemässen Kolbens 1 gemäss Fig. 3b ist Ausnehmung in Form einer umlaufenden, in Bezug auf die Kolbenachse A schraubenförmig ausgestalteten Nute 5, 52 realisiert. Durch Verwendung einer schraubenförmigen bzw. spiralförmige Ausführung der Nute 5, 52 kann die Beaufschlagung des zweiten Kolbenrings 42 mit dem zweiten Teildruck P2 zusätzlich abgestimmt und eingestellt werden.

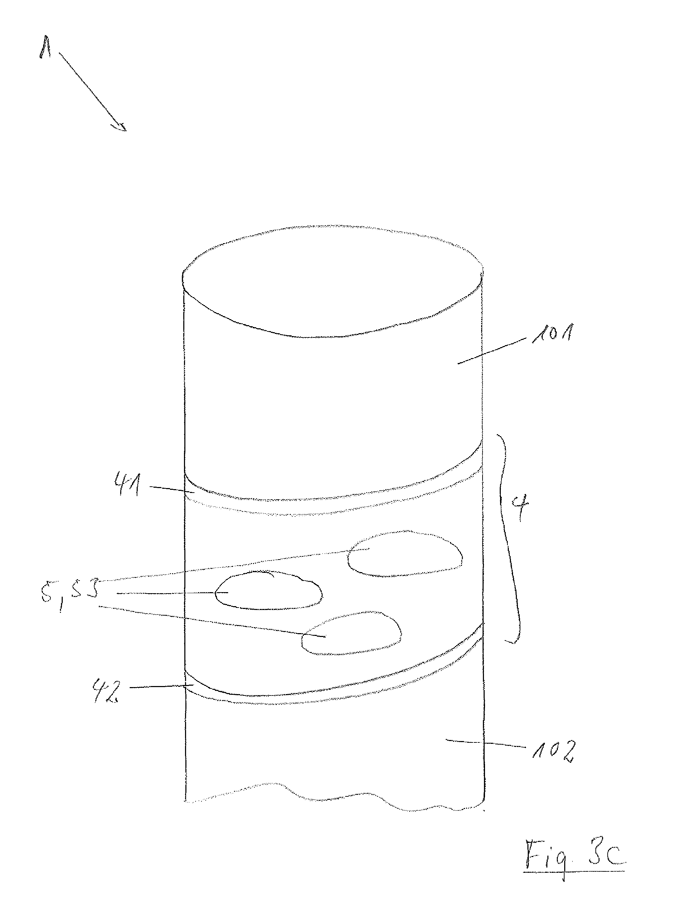

Beim vierten Ausführungsbeispiel eines erfindungsgemässen Kolbens 1 gemäss Fig. 3c sind die Ausnehmungen 5, 53 in Form separater flächenhafter Vertiefungen 53 ausgebildet. Auch solche Ausführungsformen können in speziellen Fällen vorteilhaft eingesetzt werden, eventuell auch in Kombination mit einer der Ausführungsformen gem. Fig. 3a oder Fig. 3b.

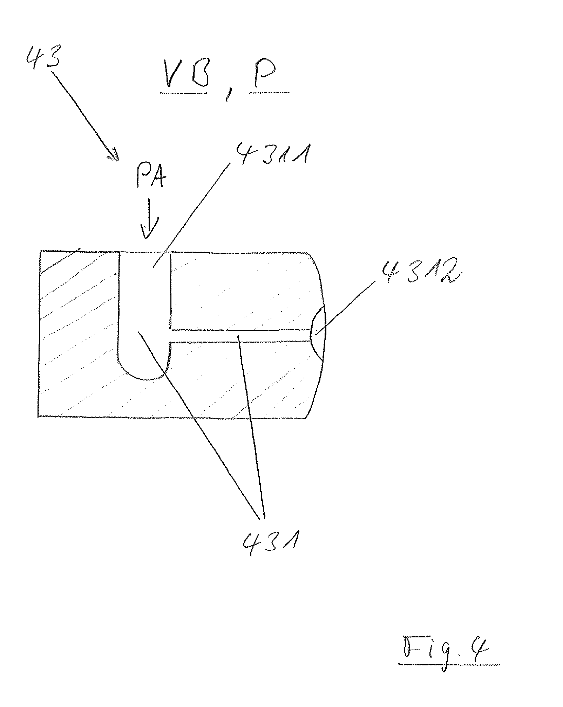

Fig. 4 zeigt schliesslich im Detail ein bevorzugtes Ausführungsbeispiel eines Ölverteilrings 43 der vorliegenden Erfindung.

Wie gut zu erkennen ist, ist am Ölverteilring 43 ein Verbindungskanal 431 vorgesehen, der an einer dem Brennraum VB zugewandten Oberseite eine mit einem vorgebbaren Anteil PA des Brennraumdrucks P beaufschlagbare Einlassöffnung 4311 und eine an einer äusseren Umfangsfläche, die im Betriebszustand mit der in Fig. 4 aus Gründen der Übersichtlichkeit nicht gezeigten Zylinderwand 31 in reibendem Kontakt steht, vorgesehene Auslassöffnung 4312 verbindet.

Dabei ist es möglich, dass der Ölverteilring 43 zusätzlich zum ersten Kolbenring 41 und zum zweiten Kolbenring 42 im Kolbenringpaket 4 vorgesehen ist. In einem anderen Ausführungsbeispiel ist es möglich, dass der zweite Kolbenring 42 als Ölverteilring 43 ausgebildet ist. Es versteht sich von selbst, dass in ein und demselben Kolbenringpaket 4 auch mehr als ein Ölverteilring vorgesehen werden kann.

## Patentansprüche

1. Kolben für eine Hubkolbenbrennkraftmaschine (2) mit mindestens einem Zylinder (3), insbesondere Zweitakt-Grossdieselmotor, in welchem Zylinder (3) der Kolben im Einbauzustand einen Brennraum (VB) begrenzt und entlang einer Kolbenachse (A) des Kolbens im Zylinder (3) zwischen einem oberen Totpunkt und einem unteren Totpunkt in axialer Richtung hin- und herbewegbar angeordnet ist, wobei an einer Mantelfläche des Kolbens zwischen einer dem Brennraum (VB) zugewandten Kolbenkrone (101) und einem dem Brennraum (VB) abgewandten Kolbenhemd (102) eine mit einer Zylinderwand (31) des Zylinders (3) reibend zusammenwirkende Kolbenringpackung (4) ausgebildet ist, die eine Teilringpackung (400) mit einem ersten Kolbenring (41) in einer ersten Kolbenringnute (411) umfasst, welcher erste Kolbenring (41) zwischen der Kolbenkrone (101) und einem in einer Ölringnute (4301) angeordneten Ölverteilring (43) vorgesehen ist, **dadurch gekennzeichnet, dass** zur kontrollierten Druckbeaufschlagung des Ölverteilrings (43) mit einem vorgebbaren Anteil eines Brennraumdrucks (P) des Brennraums (VB), an der Teilringpackung (400) ein Druckentlastungsmittel (4000, 4111, 4112, 4113, 4114) vorgesehen ist.

2. Kolben nach Anspruch 1, wobei am Ölverteilring (43) ein Verbindungskanal (431) vorgesehen ist, der an einer dem Brennraum (VB) zugewandten Oberseite eine mit einem vorgebbaren Anteil des Brennraumdrucks (P) beaufschlagbare Einlassöffnung (4311) und eine an einer äusseren Umfangsfläche, die im Betriebszustand mit der Zylinderwand (31) in reibendem Kontakt steht, vorgesehene Auslassöffnung (4312) verbindet.

3. Kolben nach einem der Ansprüche 1 oder 2, wobei die Kolbenringpackung (4) einen zweiten Kolbenring (42) in einer zweiten Kolbenringnute (421) umfasst.

4. Kolben nach einem der vorangehenden Ansprüche, wobei der zweite Kolbenring (42) zwischen dem in der Ölringnute (4301) angeordneten Ölverteilring (43) und dem dem Brennraum (VB) abgewandten Kolbenhemd (102) vorgesehen ist.

5. Kolben nach einem der vorangehenden Ansprüche, wobei die Teilringpackung (400) derart ausgestaltet ist, dass in einem Bereich an einer dem Brennraum (VB) zugewandten Oberseite des ersten Kolbenring (41) im Betriebszustand ein erster Teildruck (P1) des Brennraumdrucks (P) ausbildbar ist und in einem Bereich an einer dem Brennraum (VB) zugewandten Oberseite des zweiten Kolbenrings (42) im Betriebszustand ein zweiter Teildruck (P2) des Brennraumdrucks (P) ausbildbar ist.

6. Kolben nach einem der vorangehenden Ansprüche, wobei an einer dem Ölverteilring (43) dem zweiten Kolbenring (42) zugewandten Unterseite (4110) des ersten Kolbenrings (41) das Druckentlastungsmittel (4000, 4111, 4112, 4113, 4114) in Form einer Druckentlastungsnute (4111) vorgesehen ist, die sich über einen vorgebbaren Bereich an der Unterseite (4110) des ersten Kolbenrings (41) erstreckt, wobei sich die Druckentlastungsnute (4111) bevorzugt in einer von einer radialen Richtung (R) abweichenden Richtung an der Unterseite (4110) des Kolbenrings (41), insbesondere senkrecht zur Kolbenachse (A) erstreckt und / oder wobei sich die Druckentlastungsnute (4111) über eine gesamte Breite (b) des Kolbenrings (41) erstreckt.

7. Kolben nach einem der vorangehenden Ansprüche, wobei das Druckentlastungsmittel (4000, 4111, 4112, 4113, 4114) in Form einer Druckentlastungsbohrung (4112) im Kolbenring (41) vorgesehen ist.

8. Kolben nach einem der vorangehenden Ansprüche, wobei das Druckentlastungsmittel (4000, 4111, 4112, 4113, 4114) in Form einer Druckentlastungsfuge (4113) an der ersten Kolbenringnute (411) vorgesehen ist.

9. Kolben nach einem der vorangehenden Ansprüche, wobei das Druckentlastungsmittel (4000, 4111, 4112, 4113, 4114) in Form eines Druckentlastungskanals (4114) an der ersten Kolbenringnute (411) vorgesehen ist.

10. Kolben nach einem der vorangehenden Ansprüche, wobei zwischen dem ersten Kolbenring (41) und dem zweiten Kolbenring (42), im Speziellen zwischen dem ersten Kolbenring (41) und dem Ölverteilring (43) in der Mantelfläche ein Zwischenraum in Form einer Ausnehmung (5, 51, 52, 53) vorgesehen ist.

11. Kolben nach einem der vorangehenden Ansprüche, wobei der erste Kolbenring (41) in Bezug auf die Kolbenachse (A) eine mit der Zylinderwand (31) zusammenwirkende asymmetrische Aussenkontur aufweist, und die Breite (b) des ersten Kolbenrings (41) in Richtung zur Ausnehmung (5, 51, 52, 53) zunehmend grösser wird.

12. Kolben nach einem der Ansprüche 5 bis 11, wobei der erste Teildruck (P1) grösser ist als der zweite Teildruck (P2).

13. Kolben nach einem der Ansprüche 5 bis 12, wobei der zweite Kolbenring (42) derart ausgestaltet ist, dass er im Einbau- und Betriebszustand weitgehend druckdicht mit der Zylinderwand (31) des Zylinders (3) zusammenwirkt, und / oder wobei der Brennraumdruck (P) im Wesentlichen die Summe aus dem ersten Teildruck (P1) und einem Druckabfall über dem Ölverteilring (43) und dem zweiten Teildruck (P2) ist und / oder wobei der erste Teildruck (P1) bevorzugt zwischen 55% und 95%, Im speziellen ca. 65% des Brennraumdrucks (P) beträgt.

14. Kolben nach einem der vorangehenden Ansprüche, wobei die Ausnehmung (5, 51, 52, 53) ein zwischen dem ersten Kolbenring (41) und dem zweiten Kolbenring (42) in einer Umfangsrichtung des Kolbens verlaufender Ringraum (51), im speziellen eine Ringnute, insbesondere eine um die Kolbenachse (A) verlaufende schraubenförmige Nute (52) ist, und / oder wobei die Ausnehmung (5, 51, 52, 53) eine flächenhafte Vertiefung (53) in der Mantelfläche des Kolbens ist und wobei bevorzugt eine Mehrzahl von separaten flächenhaften Vertiefungen (53) ausgebildet ist.

15. Ölverteilring für einen Kolben (1) einer Hubkolbenbrennkraftmaschine (2) nach einem der Ansprüche 1 bis 14, wobei am Ölverteilring ein Verbindungskanal (431), bevorzugt umfassend ein Vorratsreservoir für Schmieröl, vorgesehen ist, der an einer im Einbauzustand einem Brennraum (VB) zugewandten Oberseite eine mit einem vorgebbaren Anteil eines Brennraumdrucks (P) beaufschlagbare Einlassöffnung (4311) und eine an einer äusseren Umfangsfläche, die im Einbau- und Betriebszustand mit einer Zylinderwand (31) in reibendem Kontakt steht, vorgesehene Auslassöffnung (4312) verbindet.
